# FASCICULE DE BREVET EUROPEEN

(11) **EP 1 527 873 B1**
(45) Date de publication et mention de la délivrance du brevet: **21.08.2019**
(21) Numéro de dépôt: 04292431.6
(22) Date de dépôt: 13.10.2004
(51) Int. Cl.: B32B 27/34, B32B 27/40

(54) **Structures multicouches polyamide/polyuréthane pour articles décorés**
Mehrschichtkörper aus Polyamid/Polyurethan für dekorierte Gegenstände
Multilayers of polyamide/polyurethane for decorated articles

(30) Priorité: 20.10.2003 FR 0312221
(43) Date de publication de la demande: 04.05.2005
(73) Titulaire: ARKEMA FRANCE, 92700 Colombes (FR)
(72) Inventeur: Lacroix, Christophe, 27700 Harquency (FR); Montanari, Thibaut, 27300 Bernay (FR)
(74) Mandataire: Schaefer, Anne-Sophie

(56) Documents cités:
- EP-A- 0 473 254
- EP-A2- 0 382 236
- GB-A- 1 520 466
- US-A- 4 423 185
- US-A- 5 217 794
- US-A- 5 630 844
- US-A- 6 127 043

## Description

### [Domaine de l'invention]

La présente invention concerne des structures multicouches polyamide / polyuréthane thermoplastique (TPU) pour articles décorés. Elles se présentent sous forme de film ou de plaque (on utilise habituellement le terme film jusqu'à une épaisseur de 0,5 mm environ et le terme plaque au delà). Ces structures peuvent être collées par exemple par pressage à chaud sur un article tel qu'un ski, la couche de polyamide étant à l'extérieur. Dans ce cas la couche de polyamide forme le dessus du ski. Avant le collage de la structure polyamide / TPU le ski peut être préalablement décoré sur le dessus (c'est à dire sur la partie opposée à la semelle qui glisse sur la neige) ainsi après le collage de la structure polyamide / TPU, et si la couche de TPU est translucide ou transparente, on voit le décor. On peut aussi après le collage de la structure polyamide / TPU sur le ski décorer le ski par sublimation d'encres dans la couche de polyamide. On peut aussi combiner ces deux modes de décoration.

Selon une autre forme les structures polyamide / TPU peuvent être collées sur une mousse de polyuréthane, la structure obtenue est utile par exemple pour faire chaussures de sport.

Selon une autre forme les structures polyamide / TPU peuvent être collées sur du polyuréthane rigide, la structure obtenue est utile par exemple pour faire differents objets.

### [L'art antérieur et le problème technique]

Les brevets US 5616418 et US 5506310 décrivent une structure constituée successivement d'une couche de polyamide, d'une couche d'un mélange de polyamide élastomère et de polyoléfine greffée et d'une couche qui peut être en bois, en métal, en époxy ou en polyuréthane. Cette structure peut être un ski c'est à dire que la couche en époxy ou en polyuréthane n'est pas une couche thermoplastique mais est l'âme du ski. Cette partie du ski n'est pas thermoplastique, la résine époxy est réticulée, de même si elle est en polyuréthane, c'est un polyuréthane rigide.

La brevet EP 0382236 décrit une structure multicouche comprenant une couche transparente a base de polyamide et une couche a base de polyurethane thermoplastique (TPU).

### [Brève description de l'invention]

La présente invention concerne une structure multicouche comprenant une couche transparente à base de polyamide et une couche à base de polyuréthane thermoplastique (TPU) selon la revendication 1.

L'invention concerne aussi un article décoré constitué d'un objet sur lequel on a collé la structure précédente, la couche de polyamide étant à l'extérieur selon la revendication 6. Le collage peut être effectué par pressage à chaud ou à l'aide d'un adhésif. Le décor peut être déjà existant sur l'objet avant le collage de la structure, on peut aussi décorer la couche de polyamide par sublimation d'encres ou combiner ces deux modes de décor.

Selon une autre forme les structures polyamide / TPU peuvent être collées sur une mousse de polyuréthane ou sur une résine polyuréthane. On peut aussi surmouler la mousse de polyuréthane ou la résine polyuréthane sur la structure polyamide / TPU disposée dans un moule, la couche de polyamide étant du coté de la paroi du moule selon la revendication 8. La structure obtenue est utile par exemple pour faire des skis ou des chaussures de sport. L'invention concerne aussi ces structures. Avantageusement la couche de polyamide est semi cristalline. Avantageusement la couche de TPU est transparente.

Chacune des couches peut être constituée de plusieurs couches.

La structure de l'invention présente de nombreux avantages.
La couche de polyamide apporte :
- la tenue à l'abrasion,
- la tenue au choc et notamment à froid,
- la décoration possible par sublimation d'encres grâce à sa température de fusion (ou de transition vitreuse) élevée alors que le TPU et les mélanges de TPU et d'ABS ne peuvent pas être decorés par sublimation d'encres,
- la transparence totale avec les PA semi-aromatiques ou semi-cycloaliphatiques et leurs mélanges éventuels avec des polyamides aliphatiques de type PA 11 ou PA 12,
- la tenue UV et chimique,
- l'aspect brillant,
- le toucher lisse.
La couche de TPU apporte :
- l'adhésion sur les encres de sérigraphie en particulier l'encre polyuréthane (PU) pour la décoration ces encres pouvant être déposées sur des laques, il y a donc adhésion sur les encres et sur les laques,
- l'adhésion sur une mousse PU,
- le surmoulage par des TPU,
- La couche de TPU est telle que l'adhésion avec le PA est très bonne,
- pas de prétraitement nécessaire.

### [Description détaillée de l'invention]

**S'agissant de la couche de polyamide** elle comprend au moins un polyamide choisi parmi les PA semi-aromatiques ou semi-cycloaliphatiques et les polyamides aliphatiques. Avantageusement la couche de polyamide comprend :
5 à 40% en poids d'au moins un polyamide choisi parmi les PA semi-aromatiques et les polyamides semi-cycloaliphatiques,
95 à 60% d'au moins un polyamide aliphatique et éventuellement au moins un produit choisi parmi les modifiants chocs, les compatibilisants et les copolymères à blocs polyamides et blocs polyethers.

Les polyamides aliphatiques peuvent être choisis parmi le PA 11, le PA 12, les polyamides aliphatiques résultant de la condensation d'une diamine aliphatique ayant de 6 à 12 atomes de carbone et d'un diacide aliphatique ayant de 9 à 12 atomes de carbone et les copolyamides 11/12 ayant soit plus de 90% de motifs 11 soit plus de 90% de motifs 12.

A titre d'exemple de polyamides aliphatiques résultant de la condensation d'une diamine aliphatique ayant de 6 à 12 atomes de carbone et d'un diacide aliphatique ayant de 9 à 12 atomes de carbone on peut citer :
le PA 6-12 résultant de la condensation de l'hexaméthylène diamine et de l'acide 1,12-dodecanedioïque,
le PA 9-12 résultant de la condensation de la diamine en C9 et de l'acide 1,12-dodecanedioïque,
le PA 10-10 résultant de la condensation de la diamine en C10 et de l'acide 1,10-decanedioïque,
le PA 10-12 résultant de la condensation de la diamine en C9 et de l'acide 1,12-dodecanedioïque.

Quant aux copolyamides 11/12 ayant soit plus de 90% de motifs 11 soit plus de 90% de motifs 12, ils résultent de la condensation de l'acide amino 1-undecanoïque avec le lauryllactame (ou l'alpha omega amino acide en C12).

La couche de polyamide peut comprendre aussi des copolymères à blocs polyamides et blocs polyéthers, mais il est avantageux que ce soit en proportion n'altérant pas la transparence de cette couche.

**Les copolymères à blocs polyamides et blocs polyéthers** résultent de la copolycondensation de séquences polyamides à extrémités réactives avec des séquences polyéthers à extrémités réactives, telles que, entre autres :
1) Séquences polyamides à bouts de chaîne diamines avec des séquences polyoxyalkylènes à bouts de chaînes dicarboxyliques.
2) Séquences polyamides à bouts de chaînes dicarboxyliques avec des séquences polyoxyalkylènes à bouts de chaînes diamines obtenues par cyanoéthylation et hydrogénation de séquences polyoxyalkylène alpha-oméga dihydroxylées aliphatiques appelées polyétherdiols.
3) Séquences polyamides à bouts de chaînes dicarboxyliques avec des polyétherdiols, les produits obtenus étant, dans ce cas particulier, des polyétheresteramides. Les copolymères de l'invention sont avantageusement de ce type.

Les séquences polyamides à bouts de chaînes dicarboxyliques proviennent par exemple de la condensation de précurseurs de polyamides en présence d'un diacide carboxylique limiteur de chaîne.

Les séquences polyamides à bouts de chaînes diamines proviennent par exemple de la condensation de précurseurs de polyamides en présence d'une diamine limiteur de chaîne.

Les polymères à blocs polyamides et blocs polyéthers peuvent aussi comprendre des motifs répartis de façon aléatoire. Ces polymères peuvent être préparés par la réaction simultanée du polyéther et des précurseurs des blocs polyamides.

Par exemple, on peut faire réagir du polyétherdiol, des précurseurs de polyamide et un diacide limiteur de chaîne. On obtient un polymère ayant essentiellement des blocs polyéthers, des blocs polyamides de longueur très variable, mais aussi les différents réactifs ayant réagi de façon aléatoire qui sont répartis de façon aléatoire (statistique) le long de la chaîne polymère.

On peut aussi faire réagir du polyétherdiamine, des précurseurs de polyamide et un diacide limiteur de chaîne. On obtient un polymère ayant essentiellement des blocs polyéthers, des blocs polyamides de longueur très variable, mais aussi les différents réactifs ayant réagi de façon aléatoire qui sont répartis de façon aléatoire (statistique) le long de la chaîne polymère.

La quantité de blocs polyéther dans ces copolymères à blocs polyamides et blocs polyéthers est avantageusement de 10 à 70% en poids du copolymère et de préférence de 35 à 60%.

Les blocs polyétherdiols sont soit utilisés tels quels et copolycondensés avec des blocs polyamides à extrémités carboxyliques, soit ils sont aminés pour être transformés en polyéther diamines et condensés avec des blocs polyamides à extrémités carboxyliques. Ils peuvent être aussi mélangés avec des précurseurs de polyamide et un limiteur de chaîne diacide pour faire les polymères à blocs polyamides et blocs polyéthers ayant des motifs répartis de façon statistique.

La masse molaire en nombre *M̅n̅* des séquences polyamides est comprise entre 500 et 10000 et de préférence entre 500 et 4000 sauf pour les blocs polyamides du deuxième type. La masse *M̅n̅* des séquences polyéther est comprise entre 100 et 6 000 et de préférence entre 200 et 3 000.

Ces polymères à blocs polyamides et blocs polyéthers qu'ils proviennent de la copolycondensation de séquences polyamides et polyéthers préparées auparavant ou d'une réaction en une étape présentent, par exemple, une viscosité intrinsèque entre 0,8 et 2,5 mesurée dans le métacrésol à 25°C pour une concentration initiale de 0,8 g/100 ml.

On peut citer par exemple la composition comprenant, en poids :
a) de 1 à 99 %, avantageusement 5 à 40 %, d'un premier polyamide caractériser par les enchaîn ements 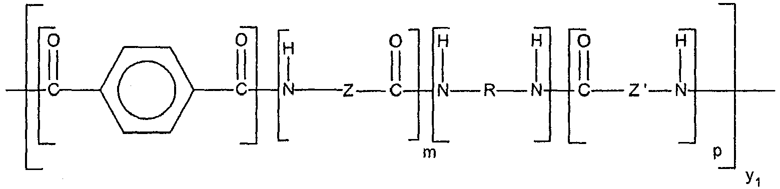 et 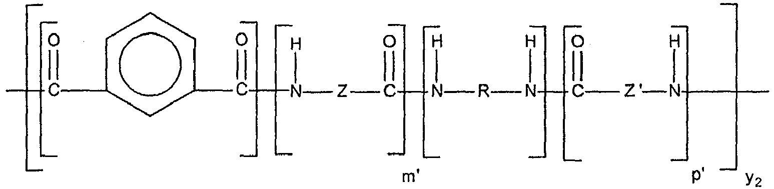 dans lesquels
   - y₁ et y₂: sont des nombres tels que leur somme y₁ + y₂ est comprise entre 10 et 200 et que y₁/y₁ + y₂ = 0,5 ;
   - m, p, m', p': sont des nombres égaux ou supérieurs à 0 ;
   - Z et Z': dans les motifs aliphatiques - NH-Z-CO- et - NH-Z'-CO-, identiques ou différents sont soit un segment polyméthylène 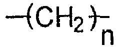 où n est un nombre entier égal ou supérieur à 6 et de préférencecompris entre 7 et 11, soit une séquence contenant une fonction amide résultant de la condensation sensiblement stoechiométrique d'une ou plusieurs diamine(s) aliphatique (s) contenant au moins 4 atomes de carbone entre les fonctions amines et d'un ou plusieurs diacide(s) carboxylique(s) aliphatique(s) contenant au moins 4, et de préférene au moins 6, atomes de carbone entre les fonctions acides ;
   - -HN-R-NH-: est une diamine cycloaliphatique et/ou aliphatique et/ou arylaliphatique ;
   le diacide aromatique pouvant être remplacé jusqu'à 30 % en mole par un diacide carboxylique aliphatique contenant plus de 4, de préférence 6, atomes de carbone entre les fonctions acides ; et
b) 99 à 1 %, avantageusement 95 à 60 %, d'un polyamide semi-cristallin comprenant au moins 35 %, de préférence 50 %, en poids d'un motif aliphatique défini par la séquence -NH-(CH₂)_{n'}-CO- où n'est un nombre entier égal ou supérieur à 6 et de préférence compris entre 7 et 11, éventuellement en tant que partie d'un motif semi-aromatique, et/ou d'un motif aliphatique défini par la séquence contenant une fonction amide résultant de la condensation sensiblement stoechiométrique d'une ou plusieurs diamine(s) aliphatique(s) contenant au moins 4 atomes de carbone entre les fonctions amines et d'un ou plusieurs diacide(s) carboxylique(s) aliphatique(s) contenant au moins 4, et de préférence au moins 6, atomes de carbone entre les fonctions acides, susceptible d'être obtenue selon un procédé comprenant une étape de mélange desdits premier polyamide et polyamide semi-cristallin à une température supérieure à 300°C, de préférence entre 300° et 400°C. Le polyamide semi-cristallin est de préférence choisi parmi les polyamides aliphatiques cités plus haut et est avantageusement du PA 11 ou du PA 12.

On peut encore citer la composition polyamide comprenant un polyamide semi-cristallin et une quantité suffisante de polyamide amorphe présentant une température de transition vitreuse et ne présentant pas de changement de phase pour la rendre transparente et traitable à chaud sans déformation, susceptible d'être obtenue par le mélange de ses constituants à une température supérieure ou égale à 300°C et d'une transformation à une température supérieure ou égale à 300°C, la transparence étant telle que le coefficient de transmission lumineuse est supérieur ou égal à 50%, mesuré à 700 nm et pour une épaisseur de 2 mm.

Avantageusement cette composition comprend, en poids:
95 à 60% (avantageusement 65 à 80 %) dudit polyamide semi-cristallin; et
5 à 40% (avantageusement 35 à 20 %) dudit polyamide amorphe.

Mieux encore cette composition comprend, en poids:
68 à 77 % dudit polyamide semi-cristallin; et
32 à 23 % dudit polyamide amorphe.

Le polyamide semi-cristallin est de préférence choisi parmi les polyamides aliphatiques cités plus haut et est avantageusement du PA 11 ou du PA 12.

On peut encore citer la composition transparente comprenant en poids, le total étant 100%:
- 5 à 40% d'un polyamide amorphe (B) qui résulte essentiellement de la condensation:
   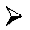 soit d'au moins une diamine choisie parmi les diamines cycloaliphatiques et les diamines aliphatiques et d'au moins un diacide choisi, parmi les diacides cycloaliphatiques et les diacides aliphatiques, l'un au moins de ces motifs diamines ou diacides étant cycloaliphatique,
   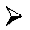 soit d'un acide alpha omega amino carboxylique cycloaliphatique,
   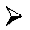 soit d'une combinaison de ces deux possibilités,
   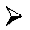 et éventuellement d'au moins un monomère choisi parmi les acides alpha omega amino carboxyliques ou les éventuels lactames correspondants, les diacides aliphatiques et les diamines aliphatiques,
- 0 à 40% d'un polyamide souple (C) choisi parmi les copolymères à blocs polyamides et blocs polyether et les copolyamides,
- 0 à 20% d'un compatibilisant (D) de (A) et (B),
- 0 à 40% d'un modifiant souple (M),
- avec la condition que (C)+(D)+(M) est compris entre 0 et 50%,
- le complément à 100% d'un polyamide (A) semi cristallin.

Le polyamide semi-cristallin est de préférence choisi parmi les polyamides aliphatiques cités plus haut et est avantageusement du PA 11 ou du PA 12.

On peut encore citer la composition transparente comprenant en poids, le total étant 100%:
- 5 à 40% d'un polyamide amorphe (B) qui résulte essentiellement de la condensation d'au moins une diamine éventuellement cycloaliphatique, d'au moins un diacide aromatique et éventuellement d'au moins un monomère choisi parmi :
   les acides alpha omega amino carboxyliques,
   les diacides aliphatiques,
   les diamines aliphatiques,
- 0 à 40% d'un polyamide souple (C) choisi parmi les copolymères à blocs polyamides et blocs polyether et les copolyamides,
- 0 à 20% d'un compatibilisant (D) de (A) et (B),
- (C)+(D) est compris entre 2 et 50%
- avec la condition que (B)+(C)+(D) n'est pas inférieur à 30%,
- le complément à 100% d'un polyamide (A) semi cristallin.

Le polyamide semi-cristallin est de préférence choisi parmi les polyamides aliphatiques cités plus haut et est avantageusement du PA 11 ou du PA 12.

Dans ces deux dernières compositions les termes "transparent", "polyamide", "semi-cristallin" et "amorphe" ont les définitions suivantes :
Le terme "transparent" correspond à un coefficient de transmission lumineuse supérieur ou égal à 50 %, mesuré à 560 nm et pour une épaisseur de 2 mm. Préférentiellement il est >= 80%.

Le terme "polyamide" employé dans la présente description couvre aussi les copolyamides, pouvant contenir des tiers monomères en une proportion n'affectant pas les qualités essentielles des polyamides.

Le terme "semi-cristallin" couvre les (co)polyamides présentant à la fois une température de transition vitreuse Tg et une température de fusion Tf.

Le terme "amorphe" couvre des polyamides qui passent à l'état liquide ou fondu donc qui peuvent se mettre en oeuvre, au-dessus de leur Tg. Ces polymères n'ont a priori pas de Tf en DSC. Toutefois ils peuvent en avoir une mais son intensité est alors négligeable et n'affecte pas le caractère essentiellement amorphe du polymère.

**S'agissant de la couche de TPU,** ces TPU sont constitués de blocs polyethers souples qui sont des restes de polyetherdiols et de blocs rigides (polyuréthanes) qui résultent de la réaction d'au moins un diisocyanate avec au moins un diol court. Le diol court allongeur de chaîne peut être choisi dans le groupe constitué du neopentylglycol, du cyclohexanediméthanol et des glycols aliphatiques de formule HO(CH₂)ₙOH dans laquelle n est un entier valant de 2 à 10. Les blocs polyuréthanes et les blocs polyéthers sont reliés par des liaisons résultant de la réaction des fonctions isocyanates avec les fonctions OH du polyétherdiol.

On peut encore citer les polyesteruréthannes par exemple ceux comprenant des motifs diisocyanates, des motifs dérivés de polyesters diols amorphes et des motifs dérivés d'un diol court allongeur de chaîne. Ils peuvent contenir des plastifiants.

Le TPU peut être en mélange avec des copolymères à blocs polyamides et blocs polyéthers et/ou des résines vinyle aromatique.

**S'agissant de la résine vinyle aromatique,** par monomère vinylaromatique au sens de la présente invention, on entend un monomère aromatique à insaturation éthylénique tel que le styrène, le vinyltoluène, l'alphaméthylstyrène, le méthyl-4-styrène, le méthyl-3-styrène, le méthoxy-4-styrène, l'hydroxyméthyl-2-styrène, l'éthyl-4-styrène, l'éthoxy-4-styrène, le diméthyl-3,4-styrène, le chloro-2-styrène, le chloro-3-styrène, le chloro-4-méthyl-3-styrène, le tert.-butyl-3-styrène, le dichloro-2,4-styrène, le dichloro-2,6-styrène et le vinyl-1-naphtalène. La résine vinyle aromatique est avantageusement un polymère styrènique.

A titre d'exemple de polymère styrènique on peut citer le polystyrène, le polystyrène modifié par des élastomères, les copolymères du styrène et de l'acrylonitrile (SAN), le SAN modifié par des élastomères, l'ABS qu'on obtient par exemple par greffage (graft-polymérisation) de styrène et d'acrylonitrile sur un tronc de polybutadiène ou de copolymère butadiène-acrylonitrile, les mélanges de SAN et d'ABS, l'ABS modifié par des élastomères, le SAN modifié par des élastomères et les mélanges de SAN et d'ABS modifiés par des élastomères. Les élastomères mentionnés ci dessus peuvent être par exemple l'EPR (abréviation d'éthylène-propylène-rubber ou élastomère éthylène-propylene), l'EPDM (abréviation d'éthylène-propylene-diène rubber ou élastomère éthylène-propylene-diène), le polybutadiène, le copolymère acrylonitrile-butadiène, le polyisoprène, le copolymère isoprène-acrylonitrile. Ces élastomères sont utiles pour améliorer le choc à froid.

Le polystyrène choc peut être obtenu (i) soit par mélange de polystyrène avec des élastomères tels que le polybutadiène, des copolymères du butadiène et de l'acrylonitrile, du polyisoprène ou des copolymères de l'isoprène et de l'acrylonitrile (ii) soit plus habituellement par greffage de styrène (graft-polymérisation) sur un tronc de polybutadiène ou de copolymère butadiène-acrylonitrile.

Dans les polymères styrèniques qu'on vient de citer une partie du styrène peut être remplacée par des monomères insaturés copolymèrisables avec le styrène, à titre d'exemple on peut citer l'alpha-methylstyrène et les esters (meth)acryliques. Comme exemples des copolymères du styrène, on peut encore citer le chloropolystyrène, le poly-alpha-méthylstyrène, les copolymères styrène-chlorostyrène, les copolymères styrène-propylène, les copolymères styrène-butadiène, les copolymères styrène-isoprène, les copolymères styrène-chlorure de vinyle, les copolymères styrène-acétate de vinyle, les copolymères styrène-acrylate d'alkyle (acrylate de méthyle, d'éthyle, de butyle, d'octyle, de phényle), les copolymères styrène - méthacrylate d'alkyle (méthacrylate de méthyle, d'éthyle, de butyle, de phényle), les copolymères styrène - -chloroacrylate de méthyle et les copolymères styrène - acrylonitrile - acrylate d'alkyle. Dans ces copolymères, la teneur en comonomères va généralement jusqu'à 20% en poids. La présente invention concerne aussi des polystyrènes metallocènes à haut point de fusion. Avantageusement la résine vinyle aromatique est l'ABS et les mélanges de SAN et d'ABS.

La proportion de TPU dans la couche de TPU peut être quelconque pourvu qu'elle soit supérieure à 1% en poids et avantageusement d'au moins 20%.

**Selon une forme particulière** la couche de polyamide est constituée de 2 couches, une couche extérieure constituée d'un polyamide choisi parmi les PA semi-aromatiques ou semi-cycloaliphatiques et les polyamides aliphatiques, et par exemple soit une couche de TPU pouvant contenir un anti UV, soit une couche de copolymères à blocs polyamides et blocs polyéthers pouvant contenir un anti UV soit une couche d'un polyamide choisi parmi les PA semi-aromatiques ou semi-cycloaliphatiques et les polyamides aliphatiques et pouvant contenir un anti UV. c'est à dire que la structure de l'invention est une structure multicouche comprenant successivement une couche extérieure constituée d'un polyamide choisi parmi les PA semi-aromatiques ou semi-cycloaliphatiques et les polyamides aliphatiques, une couche intermédiaire qui est soit une couche de TPU pouvant contenir un anti UV, soit une couche de copolymères à blocs polyamides et blocs polyéthers pouvant contenir un anti UV soit une couche d'un polyamide choisi parmi les PA semi-aromatiques ou semi-cycloaliphatiques et les polyamides aliphatiques et pouvant contenir un anti UV et une couche à base de polyuréthane thermoplastique (TPU).

La couche extérieure peut être celle définie plus haut.

### [Exemples]

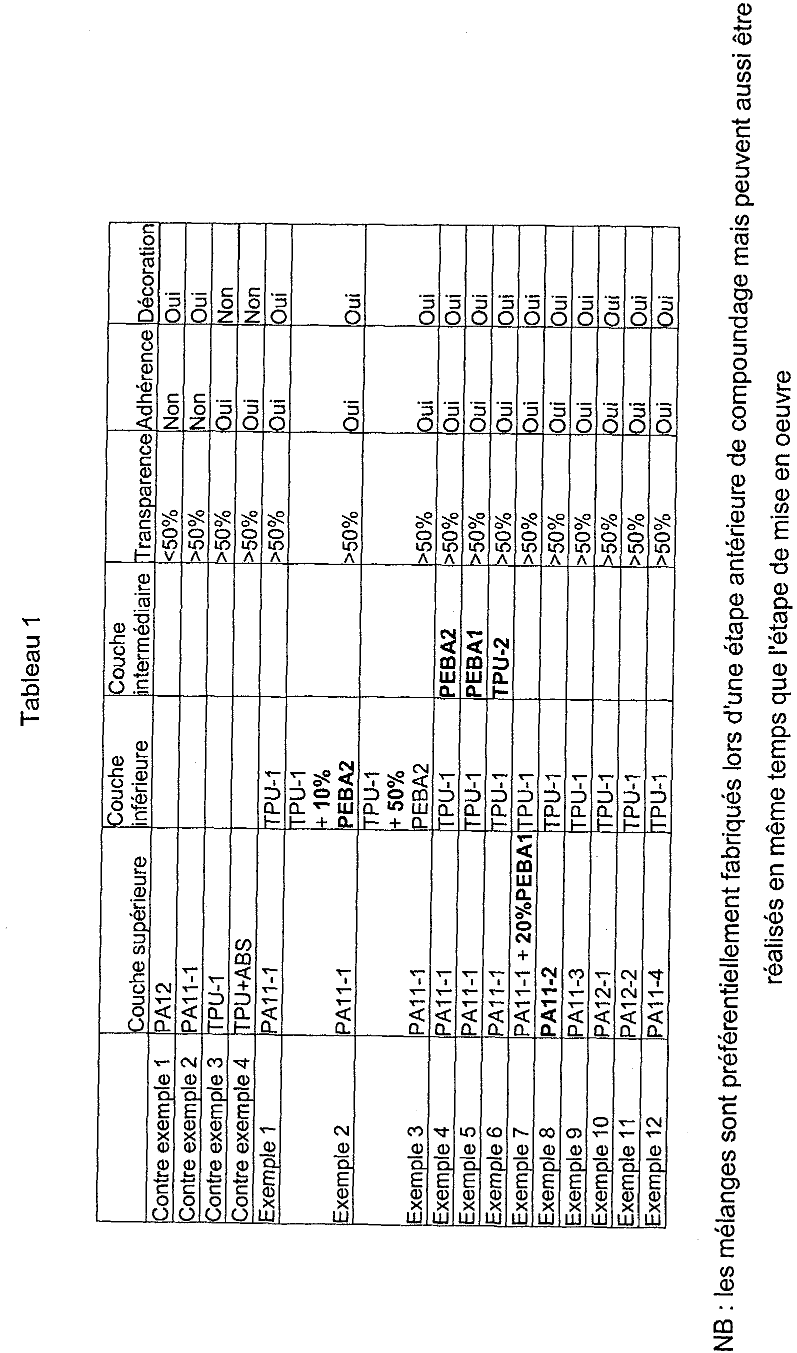

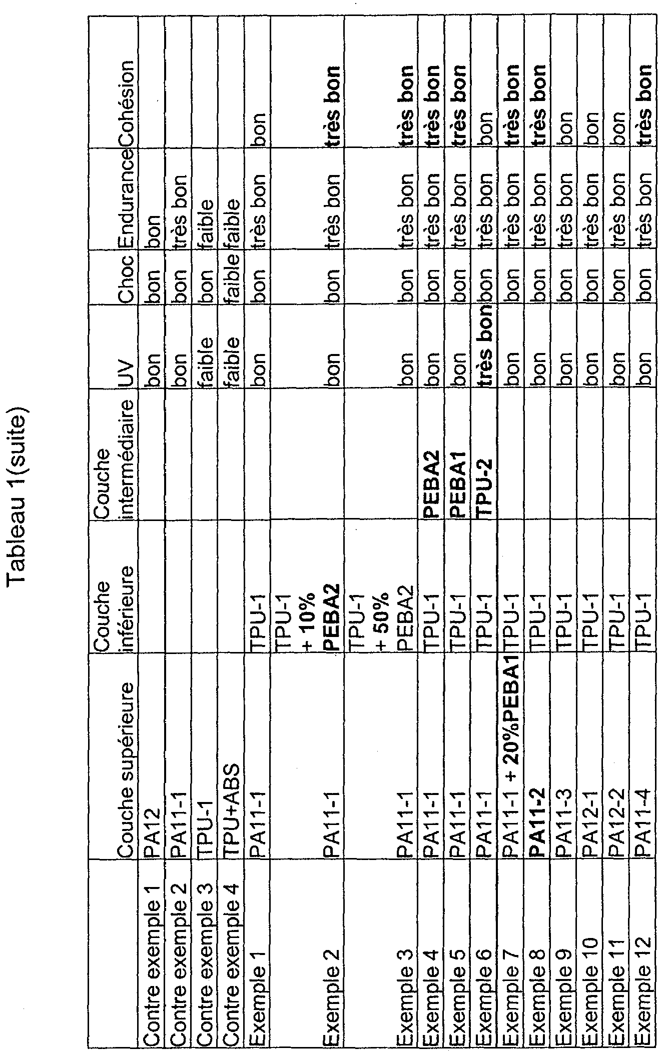

**Références des produits et définitions**

| |
|---|
| Transparence = transmission lumineuse à 560nm pour un objet d'épaisseur 2mm |
| Décoration = aptitude à être décoré par sublimation |
| UV = tenue au rayonnement UV |
| Choc = tenue au choc à basse température (0°C-40°C) |
| Endurance = aptitude à résister aux aggressions mécaniques extérieures: abrasion par du sable, coup d'objet (exemple baton de ski, carre de ski) |
| Cohésion = cohésion entre les couche sup et inf |
| PA12 = polyamide 11 de Mw 45000 à 55000 |
| PA11-1 = mélange de polyamide 11 de Mw 45000 à 55000 et de **35%** de **PASA** |
| TPU-1 = polyuréthane thermoplastique sur base éther de dureté shore A = 85 |
| TPU-2 = TPU-1 **très fortement stabilisé par des anti-UV** |
| PA11-2 = mélange de polyamide 11 de Mw 45000 à 55000 et de **35%** de PAC2 et de 20% de **PEBA1** |
| PA11-3 = mélange de polyamide 11 de Mw 45000 à 55000 et de **35%** de PAC2 |
| PA11-4 = mélange de polyamide 11 de Mw 45000 à 55000 et de 25% de PAC2 et de 6% d'**AX8840** |
| PA12-1 = mélange de polyamide 12 de Mw 45000 à 55000 et de 30% de **PAC1** |
| PA12-2 = mélange de polyamide 12 de Mw 45000 à 55000 et de 30% de PASA et de 20% de PA11 |
| PAC1 = polyamide amorphe à base de monomères cycloaliphatiques et aliphatiques, polyamide-IPD.12/12, composé en masse de 75% d'IPD.12 et 25% de 12 (Lactame 12). L'IPD étant l'isophoronediamine |
| PAC2 = polyamide amorphe à base de monomères cycloaliphatiques et aliphatiques, polyamide-IPD.10/12, composé en masse de 80% d'IPD.10 et 20% de 12 (Lactame 12). L'IPD étant l'isophoronediamine |
| PASA = polyamide semi-aromatique amorphe PA-12/BMACM, TA/BMACM,IA synthétisé par polycondensation à l'état fondu à partir de bis-(3-méthyl-4-aminocyclohexyl)-méthane (BMACM), de lauryllactame (L12) et d'acides iso- et téréphtalique (IA et TA) dans un rapport molaire 1/1/0,3/0,7. |
| PEBA1 = un copolymère à blocs PA 12 de 5000 et blocs PTMG de 650 et de MFI 4 à 10 (g/10 min à 235°C sous 1kg) |
| PEBA2 = un copolymère à blocs PA 12 de 1000 et blocs PTMG de 1000 et de MFI 4 à 10 (g/10 min à 235°C sous 1 kg) |
| AX8840 = Lotader®AX8840 un copolymère ethylène- méthacrylate de glycidyle de proportions en poids 92/8 de MFI à 190°C sous 2,16 kg compris entre 4 et 6, produit par la société Atofina |

## Revendications

1. Structure multicouche comprenant une couche transparente à base de polyamide et une couche à base de polyuréthane thermoplastique (TPU), **caractérisé en ce que** la couche à base de TPU est constituée de TPU ou d'un mélange de TPU avec des copolymères à blocs polyamides et blocs polyéthers, éventuellement en mélange avec des résines vinyle aromatique,
la couche de polyamide comprenant au moins un polyamide choisi parmi les PA semi-aromatiques ou semi-cycloaliphatiques et les polyamides aliphatiques, lesdits polyamides aliphatiques étant choisis parmi le PA 11, le PA 12, les polyamides aliphatiques résultant de la condensation d'une diamine aliphatique ayant de 6 à 12 atomes de carbone et d'un diacide aliphatique ayant de 9 à 12 atomes de carbone et les copolyamides 11/12 ayant soit plus de 90% de motifs 11 soit plus de 90% de motifs 12.

2. Structure selon l'une quelconque des revendications précédentes dans laquelle la couche de polyamide comprend en outre des copolymères à blocs polyamides et blocs polyéthers.

3. Structure selon l'une quelconque des revendications précédentes dans laquelle la résine vinyle aromatique est un polymère styrénique.

4. Structure selon la revendication 3 dans laquelle le polymère styrénique est choisi parmi le polystyrène, l'ABS, le SAN et les mélanges de SAN et d'ABS, modifiés ou non par des élastomères.

5. Structure selon l'une quelconque des revendications précédentes dans laquelle la couche de polyamide est constituée de 2 couches :
- une couche extérieure constituée d'un polyamide choisi parmi les PA semi-aromatiques ou semi-cycloaliphatiques et les polyamides aliphatiques,
- une couche intermédiaire qui est soit une couche de TPU pouvant contenir un anti UV, soit une couche de copolymères à blocs polyamides et blocs polyéthers pouvant contenir un anti UV, soit une couche d'un polyamide choisi parmi les PA semi-aromatiques ou semi-cycloaliphatiques et les polyamides aliphatiques et pouvant contenir un anti UV.

6. Article décoré constitué d'un objet sur lequel on a collé la structure de l'une quelconque des revendications précédentes, la couche de polyamide étant à l'extérieur.

7. Article selon la revendication 6 décoré par sublimation d'encres dans la couche de polyamide.

8. Structure constituée soit par le collage de la structure multicouche selon l'une quelconque des revendications 1 à 5 sur une mousse de polyuréthane ou une résine de polyuréthane soit par le surmoulage de la mousse de polyuréthane ou la résine polyuréthane sur la structure multicouche selon l'une quelconque des revendications 1 à 5 disposée dans un moule, la couche de polyamide étant du côté de la paroi du moule.

## Patentansprüche

1. Mehrschichtstruktur, umfassend eine transparente Schicht auf Polyamidbasis und eine Schicht auf Basis von thermoplastischem Polyurethan (TPU), **dadurch gekennzeichnet, dass** die Schicht auf TPU-Basis aus TPU oder aus einer Mischung von TPU mit Copolymeren aus Polyamidblöcken und Polyetherblöcken, gegebenenfalls im Gemisch mit aromatischen Vinylharzen, besteht,
wobei die Polyamidschicht mindestens ein Polyamid umfasst, das ausgewählt ist aus semi-aromatischen oder semi-cycloaliphatischen PAs und aliphatischen Polyamiden, wobei die aliphatischen Polyamide ausgewählt sind aus PA 11, PA 12, aliphatischen Polyamiden, die aus der Kondensation eines aliphatischen Diamins mit 6 bis 12 Kohlenstoffatomen und einer aliphatischen Disäure mit 9 bis 12 Kohlenstoffatomen resultieren, und 11/12-Copolyamiden mit entweder mehr als 90 % Einheiten 11 oder mehr als 90 % Einheiten 12.

2. Struktur nach einem der vorstehenden Ansprüche, wobei die Polyamidschicht ferner Copolymere aus Polyamidblöcken und Polyetherblöcken umfasst.

3. Struktur nach einem der vorstehenden Ansprüche, wobei das aromatische Vinylharz ein Styrolpolymer ist.

4. Struktur nach Anspruch 3, wobei das Styrolpolymer ausgewählt ist aus Polystyrol, ABS, SAN und Mischungen von SAN und ABS, modifiziert oder nicht modifiziert durch Elastomere.

5. Struktur nach einem der vorstehenden Ansprüche, wobei die Polyamidschicht aus 2 Schichten besteht:
- einer äußeren Schicht, bestehend aus einem Polyamid, ausgewählt aus semi-aromatischen oder semi-cycloaliphatischen PAs und aliphatischen Polyamiden,
- einer Zwischenschicht, die entweder eine TPU-Schicht, die einen UV-Schutz enthalten kann, oder eine Schicht aus Copolymeren von Polyamidblöcken und Polyetherblöcken, die einen UV-Schutz enthalten kann, oder eine Schicht aus einem Polyamid ist, das ausgewählt ist aus semi-aromatischen oder semi-cycloaliphatischen PAs und aliphatischen Polyamiden, und einen UV-Schutz enthalten kann.

6. Dekorierter Artikel, bestehend aus einem Gegenstand, auf den die Struktur nach einem der vorstehenden Ansprüche aufgeklebt ist, wobei die Polyamidschicht außen liegt.

7. Artikel nach Anspruch 6, dekoriert durch Sublimation von Tinten in die Polyamidschicht.

8. Struktur, bestehend entweder aus dem Verkleben der Mehrschichtstruktur nach einem der Ansprüche 1 bis 5 mit einem Polyurethanschaum oder Polyurethanharz oder aus dem Umformen des Polyurethanschaums oder Polyurethanharzes auf der Mehrschichtstruktur nach einem der Ansprüche 1 bis 5, die in einer Form angeordnet ist, wobei die Polyamidschicht auf der Seite der Formwand liegt.

## Claims

1. A multilayer structure comprising a polyamide based transparent layer and a thermoplastic polyurethane (TPU) based layer, **characterized in that** the TPU based layer consists of TPU or a mixture of TPU with polyamide block and polyether block copolymers, optionally in admixture with aromatic vinyl resins,
the polyamide layer comprising at least one polyamide chosen among semi-aromatic or semi-cycloaliphatic PA and aliphatic polyamides, where said aliphatic polyamides are chosen among PA 11, PA 12, the aliphatic polyamides resulting from the condensation of an aliphatic diamine having 6 to 12 carbon atoms and an aliphatic di-acid having from 9 to 12 carbon atoms and the 11/12 copolyamides having either more than 90 % 11 motifs or more than 90 % 12 motifs.

2. The structure according to any one of the preceding claims wherein the polyamide layer further comprises polyamide block and polyether block copolymers.

3. The structure according to any one of the preceding claims wherein the aromatic vinyl resin is a styrenic polymer.

4. The structure according to claim 3 wherein the styrenic polymer is chosen among polystyrene, ABS, SAN and mixtures of SAN and ABS, modified by elastomers or not.

5. The structure according to any one of the preceding claims wherein the polyamide layer is comprised of two layers:
- an outer layer made up of a polyamide chosen among semi-aromatic or semi-cycloaliphatic PA and aliphatic polyamides,
- an intermediate layer which is either a TPU layer which may contain an anti-UV, or a polyamide block and polyether block copolymer layer which can contain an anti-UV, or a polyamide layer chosen among semi-aromatic or semi-cycloaliphatic PA and aliphatic polyamides and can contain an anti-UV.

6. A decorated article made up of an object on which the structure from any one of the preceding claims was adhered, where the polyamide layer is on the outside.

7. The article according to claim 6 decorated by ink sublimation in the polyamide layer.

8. A structure constituted either by pasting the multilayer structure according to any one of claims 1 to 5 onto a polyurethane foam or polyurethane resin or by overmolding of the polyurethane foam or polyurethane resin on the multilayer structure according to any one of claims 1 to 5 placed in a mold, where the polyamide layer is on the wall side of the mold.
